# EUROPÄISCHE PATENTSCHRIFT

(11) **EP 0 806 375 B1**
(45) Veröffentlichungstag und Bekanntmachung des Hinweises auf die Patenterteilung: **14.11.2001**
(21) Anmeldenummer: 97107523.9
(22) Anmeldetag: 07.05.1997
(51) Int. Cl.: B65F 1/10, G01G 19/413, B30B 9/30

(54) **Abfallsammeleinrichtung**
Apparatus for collecting refuse
Dispositif de collecte de déchets

(30) Priorität: 07.05.1996 DE 19618273
(43) Veröffentlichungstag der Anmeldung: 12.11.1997
(73) Patentinhaber: Alois Pöttinger Maschinenfabrik GmbH, 4710 Grieskirchen (AT)
(72) Erfinder: Groisböck, Franz, 4710 St. Georgen 44 (AT)
(74) Vertreter: Dupal, Helmut, Dipl.-Ing.

(56) Entgegenhaltungen:
- DE-A- 4 122 405
- DE-A- 4 341 899
- DE-A- 4 342 762
- DE-A- 4 413 034
- DE-U- 29 602 267
- DE-U- 29 611 870

## Beschreibung

Die Erfindung betrifft eine Abfallsammeleinrichtung zum Aufnehmen, Verdichten und Speichern von Abfall mit den Merkmalen des Oberbegriffes des Anspruches 1.

Solche Abfallsammelstationen dienen zur Aufstellung an Orten die einer größeren Zahl von Personen zugänglich sind, wie öffentlichen Plätzen, wobei der Zugang zu dem Eingabeschacht einer solchen Abfallsammeleinrichtung mit Hilfe einer Kennung, z.B. mit einer Berechtigungskarte, erfolgen kann von der die Gebühr für die Übernahme des Abfalls gleichzeitig abgebucht werden kann oder auch durch Eingabe eines entsprechenden Geldbetrages.

Für die Bemessung der Bearbeitungsgebühr ist eine Mengenbestimmung des eingegebenen Abfalls erforderlich, die gewöhnlich durch die in dem Eingabeschacht einfüllbare Volumsmenge bestimmt ist.

Nachteilig dabei ist es, daß nur ein bestimmtes Volumen verrechnet werden kann, wobei schweres und leichtes Material sehr starke Abweichungen bei der Gebührenverrechnung verursachen können. Besonders auffederndes Abfallmaterial kann Probleme bei der Mengenbestimmung des Abfalls und bei der Entleerung des Eingabeschachtes durch Anlegen und Anstreifen an den Wänden hervorrufen.

Bei der Mengenbestimmung durch Wägung der Abfallmenge besteht das Problem darin, daß Abfallteile an den Schachtwänden streifen können oder die Abgabetüre nicht mehr verschließbar ist oder die Entleerung des Eingabeschachtes nicht vollständig erfolgt, wodurch Betriebsstörungen und Verfälschungen der zu bestimmenden Gewichtsmenge die Folge sind.

In der DE-A-44 13 034 wird auf eine Einfüllvorrichtung für Stoffe Bezug genommen, bei der in einem Gehäuse ein Einfüllschacht angeordnet ist, der an der Vorderseite mit einer Türe verschließbar ist und in einen nicht näher definierten Sammelraum führt.
Der Einfüllschacht ist am unteren Ende mit einer zylindermantelartig nach oben konkav gekrümmten, Wägeschale abgesperrt, die waagrecht in der Zylinderachse drehbar gelagert ist und die mit einem Stellantrieb versehen ist, mit dem diese zur Seite um 90 Winkelgrade verschwenkbar ist und damit den Einfüllschacht freigibt und aufgelagertes Gut abwirft. Die Wägeschale wird von einem Gestell getragen, das sich über eine Gewichtsmeßzelle auf dem Gehäuse abstützt.
Mit dieser in Verbindung steht eine Vorrichtung zur Gebührenermittlung und einer Elektronik für die Betätigung einer Klappe an dem Eingabeschlitz für die Identifikation und für die Betätigung eines Riegels der Türe.
Nachteilig ist an der Anordnung die offen im Schacht angebrachte Wägeschale und das Abwerfen des Mülls in einen Sammelbehälter ohne vorherige Verdichtung.

In der DE-A-43 41 899 ist auf eine Müllerfassungsstation Bezug genommen, bei der ein Einfüll- und Wägebehälter mit zylindrischem Querschnitt mit der Zylinderachse schräg aufrecht angeordnet und mit einem mittels Rechnersignal verriegelbaren oder freigebbaren Verschlußdeckel versehen ist, wobei eine Doppelzylinderanordnung für die Freigabe des Mülls nach der Wägung verstellt wird, sodaß der Müll in den darunterliegenden Müllvorratsbehälter fällt.

Der Verschlußdeckel ist erst nach Kennung einer Zugangsberechtigung zu öffnen und die Wägung erfolgt erst nach dessen Verschluß.
Die Verdichtung des Mülls geschieht mit einer Walze unter der der Müllvorratsbehälter vorbeigeführt wird.

Nachteilig ist bei dieser Anordnung die Ausrichtung des Wägebehälters und die Richtung der Einfüllöffnung nach oben, weil dadurch einerseits die Entleerung der Wägebehälters durch die räumliche Ausrichtung sehr leicht unvollkommen sein kann und andererseits die Abgabekante der Einfüllöffnung sehr hoch liegt und überdies die nachträgliche Verdichtung wesentlich schwieriger ist, umsomehr wenn diese während des Vorbeifahrens des Müllvorratsbehälters geschieht.

Das DE-U-296 02 267 bezieht sich auf eine Müllsammeleinrichtung, bestehend aus einem Müllbehandlungsteil mit einem Lese-Einspeicherteil für die Zugangsberechtigung und die Müllmengenabrechnung und die Anzeige, sowie eine Wägevorrichtung, eine Preßvorrichtung und einen Rechnerteil und mit einem Müllspeicherteil für die Speicherung des gepreßten Mülls.
Weiters wird auf die funktionellen Verbindungen und die Mittel, wie Riegelorgane, Leseinheiten Übertragungsmittel Bezug genommen mit denen der Zugang zu der Müllsammeleinrichtung, die Mengenbestimmung, die Buchung der Mengen, die Müllspeicherung und die Sperrung der Müllsammeleinrichtung selbsttätig ausgeführt wird.
Es sind allgemeine Lösungsmöglichkeiten für die selbsttätige Steuerung von Müllsammeleinrichtungen beschrieben.

Aufgabe der Erfindung ist es, die beschriebenen Nachteile zu beseitigen und eine kompakt aufgebaute Abfallsammeleinrichtung zu schaffen, die eine möglichst niedrige Abgabekante für den Abfall aufweist und bei der die Gewichtsbestimmung, die Entleerung der Wägevorrichtung und der Preßvorgang möglichst keine Störungsanfälligkeit besitzen.

Die Lösung dieser Aufgabe erfolgt bei einer Abfallsammelvorrichtung der eingangs genannten Art mit den Merkmalen des kennzeichnenden Teiles des Anspruches 1. Die Unteransprüche betreffen besonders vorteilhafte Weiterbildungen der Erfindung und stellen, ebenso wie Anspruch 1, gleichzeitig einen Teil der Beschreibung dar.

Durch die Anwendung eines Wägebehälters, der gleichzeitig den Eingabeschacht bildet und mit einer Übergabevorrichtung mit der der Wägebehälter in den Pressenraum entleert wird, beispielsweise mit einer nach unten sich öffnenden Klapptürenanordnung oder dergleichen und durch die Gestaltung und Ausrichtung des Wägebehälters und seines Schwenkdeckels wird das Anlegen von Abfall an der Schachtwand, das besonders auch bei auffederndem Material auftritt, vermieden und eine Entleerung durch die große, mit einer solchen Übergabevorrichtung erzielbaren Öffnung des Wägebehälters für das Entleeren, störungsfrei gestaltet, wobei die Verpressung unmittelbar anschließend, einen hohen Verdichtungsgrad bei niedriger Bauhöhe gestattet, wodurch eine niedrige Abgabekante an der Eingabeöffnung erzielt wird.

Für die Genauigkeit der Gewichtsbestimmung des Abfalls ist es günstig, wenn die Eingabetüre der Eingabeöffnung dem Wägebehälter unmittelbar vorgeordnet ist, wodurch Störungen im Eingabebereich des Eingabeschachtes vermieden werden.

Eine weitere wesentliche Verbesserung ergibt sich, wenn die Wägevorrichtung und besonders der Wägebehälter zusammen mit der Eingabetüre und der Übergabevorrichtung eine Einheit als Wägeschleuse am Waagegerüst bilden, wodurch die Gewichtsbestimmung für die Berechnung der Entsorgungsgebühr erst nach Schließen des Wägebehälters erfolgen kann und von Störungen weitgehend befreit ist.

Die Ausbildung des Schwenkdeckels als Eingabetüre vereinfacht die Anordnung erheblich und verringert wiederum die Bauhöhe und damit die Abgebekante für die Mülleingabe.

Durch die beidseitige Lagerung des Waagegerüstes wird eine mechanisch stabile Bauform erhalten, die gegen Lageänderungen unempfindlich ist.

Die Lagerung des Wägebehälters, um eine waagrechte Achse drehbar, ermöglicht eine gute Entleerung desselben und die Anordnung der Eingabeöffnung kann beliebig an einer günstigen Anbringungsstelle am Wägebehälter vorgesehen sein, die sich aus der Anordnung in der Abfallsammeleinrichtung ergibt.

Eine besonders vorteilhafte Ausgestaltung des Wägebehälters der Wägeschleusenanordnung wird durch seine Ausbildung als Wanne erreicht, weil dadurch die Eingabe des Abfalls und das Entleeren desselben in den Pressenraum durch Verdrehen der Wanne mit ihrer Öffnung nach unten ganz besonders vereinfacht wird und störungsfrei erfolgen kann.

Die Lagerung des Stellmotors für die Drehung der Wanne auf dem Waagegerüst vereinfacht den Aufbau der Wägevorrichtung und verbessert die Genauigkeit der Gewichtsbestimmung.

Die Anwendung eines Schwenkdeckels zum Verschließen der Eingabeöffnung der Wanne vermeidet Störungen die ansonsten beim Eingeben und Wägen des Abfalls auftreten können und vermeidet durch die Art der Anbringung des Schwenkdeckels weitgehend Probleme durch Verschmutzung.

Die Anwendung eines Endschalters für die Eingabetüre oder den Schwenkdeckel der Wanne des Wägebehälters ermöglicht einen Steuerungsablauf für das Wägen, das Übergeben und das Verdichten des Abfalls, der eine zuverlässige und genaue Gewichtsbestimmung gestattet und Störungen durch das Abfallmaterial oder von außen her verhindert.

Die Lagerung des Waagegerüstes zwischen Anschlägen sichert dieses gegen die Einwirkung von übergroßen Beschleunigungskräften und gegen die Folgen von Lageänderungen, wie sie beim Entleeren des Speicherbehälters an der Wägevorrichtung auftreten.

Die geeignete Wahl der Lagerungsstellen für die Wägevorrichtung am Tragrahmen der Abfallsammeleinrichtung und die Wahl der Anbringungsstellen für die Wägesensoren begünstigt eine zuverlässige und genaue Gewichtsbestimmung des Abfalls.

Durch die Gestaltung und Lagerung der Wanne des Wägebehälters kann diese in geringem Abstand oberhalb des Preßkolbens der Preßvorrichtung angeordnet werden und dies gilt besonders bei der Verwendung einer Schwingkolbenpresse. Es wird dadurch eine wesentlich niedrigere Eingabekante an der Eingabeöffnung der Preß- und Speichervorrichtung und eine geringere Bauhöhe insgesamt erreicht.

Die Anwendung eines Abstreifers in der Wanne ergibt eine zusätzliche Sicherheit für die ordentliche Entleerung des Abfalls, besonders wenn dieser stark an der Wand haftet.

Eine geeignete Gestaltung des Steuerungsablaufes für den Betrieb der Abfallsammeleinrichtung, besonders bei der vereinfachenden Anwendung von nur einer Eingabetüre, kann Beeinflussungen, vor allem von außen, verhindern und der störungsfreie, automatische Ablauf der Kennung der Zutrittsberechtigung, der Gewichtsbestimmung und der weiteren Bearbeitung des Abfalls kann sichergestellt werden.

Die Erfindung wird anhand der Zeichnung einer Ausführungsform der Erfindung beschrieben. Es zeigt:

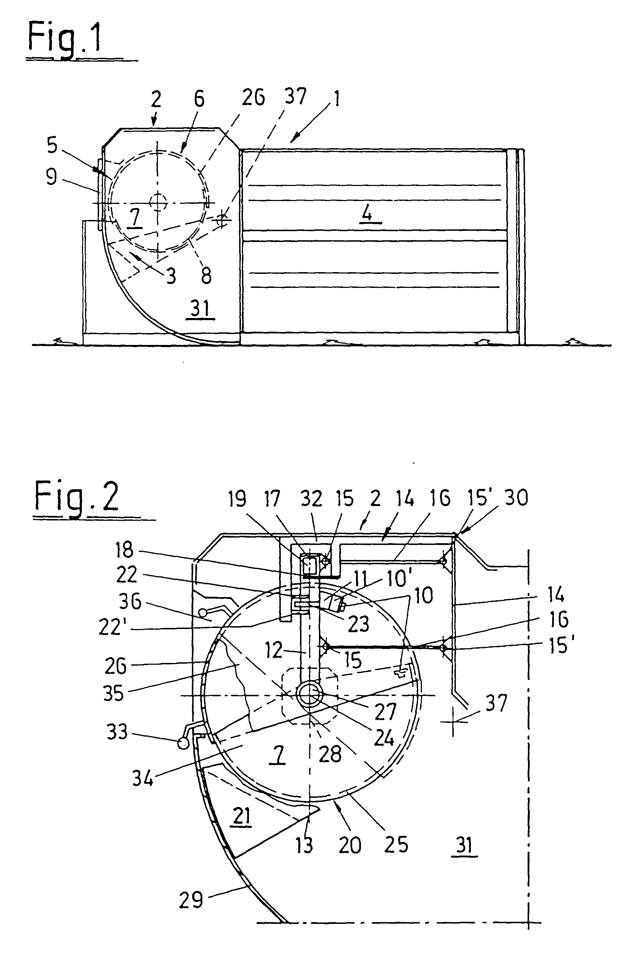

- Fig. 1: eine Abfallsammeleinrichtung in einer Gesamtseitenansicht, schematisch;
- Fiug. 2: den Eingabe- und Preßteil als Vertikalteilausschnitt, schematisch.

Eine Abfallsammeleinrichtung zur Aufstellung an öffentlichen Plätzen und Orten zu denen ein größerer Personenkreis Zutritt hat, besteht aus einem auf dem Boden stehenden Preß- und Speichercontainer 1, bei dem eine Schwingkolbenpresse als Preßvorrichtung 3 einem Speicherbehälter 4 vorgeordnet angebracht ist. Oberhalb der Preßvorrichtung 3 ist ein Eingabeteil 2 für die Kennung und Eingabe des Abfalls angeordnet.

Der Eingabeteil 2 ist unmittelbar oberhalb des Pressenraumes 31 der Preßvorrichtung 3 angeordnet und mit einem nach unten führenden Eingabeschacht 5 versehen, dessen an der Frontseite der Abfallsammeleinrichtung angeordnete Eingabeöffnung 36 mit einer Eingabetüre 9 verschließbar ist.

Im Eingabeschacht 5 befindet sich eine Wägevorrichtung 6 mit einem Wägebehälter 7, dessen unterer Teil als Übergabevorrichtung 8 ausgebildet ist mit dem der eingegebene und gewogene Abfall in den Pressenraum 31 abgeworfen wird, wo er vom Preßkolben 21 der Preßvorrichtung 3 erfaßt und in den Speicherbehälter 4 gepreßt wird. Der Preßkolben 21 ist um eine waagrechte Achse 37 verschwenkbar gelagert und schiebt den Abfall entlang einer Kreisbahn in den Speicherbehälter 4.

Der Wägebehälter 7 ist als liegende, halbzylindrisch geformte Wanne 20 mit seitlichen teilzylindrischen Böden 34 ausgebildet, deren Öffnung in der Füllstellung nach oben weist.
In den beiden Böden 34 sind in der Zylinderachse 24 der Wanne 20 Lagerzapfen 27 eingeschweißt, an denen die Wanne 20 in einem Waagegerüst 12 der Wägevorrichtung 6 drehbar gelagert ist.

Die Wanne 20 wird von einem halbzylindrischen Schwenkdeckel 26 außen an ihrer Öffnung und an dem Zylindermantel 25 überdeckt, der gleichzeitig die Eingabetüre 9 für die Eingabeöffnung 36 bildet.

Der Schwenkdeckel 26 ist seitlich mit teilzylindrischen Böden 35 versehen mit denen er an den beiden Lagerzapfen 27 der Wanne 20 drehbar gelagert ist.

Die Verschwenkung des Schwenkdeckels 26 zur Öffnung des Wägebehälters 7 ist mit einem Anschlag begrenzt.

Für die Verschlußstellung des Schwenkdeckels 26 ist ein Endschalter 10 mit dem Schwenkdeckel 26 verbunden und ein zugeordneter Endschalterteil 10' auf dem Waagegerüst 12 angebracht, der die Verschlußlage des Schwenkdeckels 26 anzeigt. Mit diesem Endschalterteil 10',10' ist ein Verriegelungsteil 11 gekoppelt, mit dem dieser in der Verschlußstellung verriegelt wird.

In der Eingabeöffnung 36 ist der Schwenkdeckel 26 mit einer Handhabe 33 zum Öffnen und Schließen von Hand aus versehen.

Die Wägevorrichtung 6 besteht aus dem Wägebehälter 7 und dem Waagegerüst 12, das Tragarme besitzt die einen, den Wägebehälter 7 überspannenden, Rahmen bilden. Das Waagegerüst ist an Lenkern 16 mit einer Parallelogrammführung an einem Tragrahmen 32, der Teil des Rahmens 14 der Abfallsammeleinrichtung ist, an vier Lagerungstellen 15 zu beiden Seiten des Wägebehälters 7 angelenkt, wobei die Lenker 16 am Tragrahmen 32 an den Lagerungsstellen 15' angelenkt sind.
Das Waagegerüst 12 ist zwischen einem oberen und einem unteren Anschlag 22,22' mit einem Anschlagstück 23 in der Höhenbewegung begrenzt, zwischen denen die Lage des Wägebehälters 7 im Wägebereich eingestellt wird und die gegen zu große Auslenkungen des Wägebehälters (7) und des Waagegerüstes (12) durch Einwirkung insbesonders hoher Beschleunigungskräfte beim Entladen des Speicherbehälters (4), schützen.

Das Waagegerüst 12 ist in der Schwerpunktsebene 13 des Wägebehälters 7 beiderseits von diesem mit oberen Konsolen 17 verbunden, die mit unteren Konsolen 18 am Tragrahmen 32 je einen Druckgeber 19 für die Gewichtsbestimmung des Abfalls einspannen.

Die Wanne 20 des Wägebehälters 7 ist an einem der Lagerzapfen mit einem Stellmotor 28 verbunden mit dem die Wanne um etwa 180° verschwenkbar ist, sodaß ihre Öffnung nach unten gerichtet werden kann, wodurch die Wanne gleichzeitig die Übergabevorrichtung 8 bildet. Der Zylindermantel 25 der Wanne 20 ist unmittelbar über dem Preßkolben 21 der Preßvorrichtung 3 angeordnet und öffnet sich durch Verdrehung in Richtung auf die Eingabeseite nach oben zu, wodurch der Abfall in den Preßweg des Preßkolbens 21 abgeworfen wird.

An dem Eingabeteil ist eine nicht dargestellte Kennungsvorrichtung angebracht, bei der die Zutrittsberechtigung mit einer Berechtigungskarte erkannt oder durch Münzeinwurf hergestellt wird.

Eine nicht dargestellte Steuerung öffnet den Verriegelungsteil 11 des Schwenkdeckels 26 nach erkannter Zutrittsberechtigung, sodaß dieser mit der Handhabe 33 geöffnet werden kann, worauf der Abfall durch die Eingabeöffnung 36 in die Wanne 20 des Wägebehälters 7 einzugeben ist.

Nach Verschließen der Eingabeöffnung 36 mit dem Schwenkdeckel 26 wird mit einem Signal des Endschalters 10,10' der weitere Steuerungsablauf in Gang gesetzt und gleichzeitig der Schwenkdeckel 26 mittels des Verriegelungsteiles 11 verriegelt und die Gewichtsbestimmung für den gesamten Wägebehälter ausgeführt, wenn der Wägebehälter (7) keine Bewegung mehr ausführt, die sonst von einem Bewegungsschalter aufgenommen wird und den Steuerungsablauf unterbricht. In diesem Fall muß der Steuerungsablauf wieder von Anfang an, also mit dem Öffnen des Schwenkdeckels (26), begonnen werden. Es wird damit die Abrechnung von fehlerhaften Gewichtsbestimmungen vermieden. Erst danach wird nach Abbuchung oder Bezahlung der Abfallgebühr die Wanne 20 mit dem Stellmotor 28 in die Entleerungslage mit der Öffnung nach unten gedreht und der Abfall in den Pressenraum 31 abgegeben, worauf der Abfall vom Preßkolben 21 verdichtet und in den Speicherbehälter 4 gepreßt wird. Anschließend wird die Wanne 20 in ihre Füllstellung und der Preßkolben 21 wieder in seine Ausgangsstellung bewegt.

Die Preßvorrichtung 3 ist im Bereich der Bahn des Preßkolbens 21 mit einem teilzylindrischem Pressengehäuse 29 abgeschlossen.

Die Abfallsammeleinrichtung ist mit einer allseitig umgebenden Verkleidung 30 versehen.

### Legende

- 1: Preß- und Speichercontainer der Abfallsammeleinrichtung
- 2: Eingabeteil der Abfallsammeleinrichtung
- 3: Preßvorrichtunq des Preß- und Speichercontainers 1
- 4: Speicherbehälter des Preß- und Speichercontainers 1
- 5: Eingabeschacht des Eingabeteiles 2
- 6: Wägevorrichtung des Eingabeschachtes 5
- 7: Wägebehälter der Wägevorrichtung 6
- 8: Übergabevorrichtung des Eingabeschachtes 5
- 9: Eingabetüre des Eingabeschachtes 5
- 10, 10': Endschalter der Eingabetüre 9
- 11: Verriegelungsteil der Eingabetüre 9
- 12: Waagegerüst der Wägevorrichtung 6
- 13: Schwerpunktsebene des Wägebehälters 7
- 14: Rahmen der Abfallsammeleinrichtung
- 15,15': Lagerungsstellen des Waaqeqerüstes 12
- 16: Lenker des Waagegerüstes 12
- 17: obere Konsole des Tragrahmens 32 des Waagegerüstes 12
- 18: untere Konsole des Tragrahmens 32 des Waagegerüstes 12
- 19: Druckgeber der Wägevorrichtung 6
- 20: Wanne des Wägebehälters 7
- 21: Preßkolben der Preßvorrichtung 3
- 22,22': oberer und unterer Anschlag am Tragrahmen 32
- 23: Anschlagstück des Waagegerüstes 12
- 24: Zylinderachse der Wanne 20
- 25: Zylindermantel der Wanne 20
- 26: Schwenkdeckel der Wanne 7
- 27: Lagerzapfen der Wanne 20
- 28: Stellmotor der Wanne 20
- 29: Pressengehäuse der Preßvorrichtung 3
- 30: Verkleidung der Abfallsammeleinrichtung
- 31: Pressenraum der Preßvorrichtung 3
- 32: Tragrahmen für das Waagegerüst 12 des Rahmens 14
- 33: Handhabe des Schwenkdeckels 26
- 34: teilzylindrischer Boden der Wanne 20
- 35: teilzylindrischer Boden des Schwenkdeckels 26
- 36: Eingabeöffnung der Abfallsammelvorrichtung
- 37: waagrechte Schwenkachse des Preßkolbens 21

## Patentansprüche

1. Abfallsammeleinrichtung zum Aufnehmen und Speichern und zum Verdichten von Abfall, ausgestattet mit einem Preß-und Speicherbehälter (4), der einen Eingabeschach (5) aufweist mit einer durch eine Eingabetüre (9) verschließbaren Eingabe-Öffnung (36), die mit einer Steuerung ent- und verriegelbar ist und dem eine Wägevorrichtung (6) zugeordnet ist, die im wesentlichen aus einem Wägebehälter (7) und aus einer mit diesem gekoppelten oder verbundenen Übergabevorrichtung (8) besteht, die den mengenbestimmten Abfall einem Speicherbehälter (4) zuführt, dem eine Preßvorrichtung (3) zugeordnet ist, **dadurch gekennzeichnet, daß** der Eingabeschacht (5) im wesentlichen von der Wägevorrichtung (6) gebildet wird, die der Preßvorrichtung (3) des Preß- und Speichercontainers (1) unmittelbar vorgeordnet ist und an der Wägevorrichtung (6) die Eingabeöffnung (36) des Eingabeschachtes (5) mit der Eingabetüre (9) angebracht ist und der Wägebehälter (7) zusammen mit der Eingabetüre (9) und der Übergabevorrichtung (8) eine Wägeschleuse bildet und der Wägebehälter (7) aus einer Wanne (20) besteht, die im wesentlichen einen liegenden, in Füllstellung nach oben und in Entleerungsstellung nach unten offenen Teilzylinder darstellt, die die Übergabevorrichtung (8) bildend, um die Zylinderachse (24) drehbar eingerichtet ist und mit einen den Zylindermantel (25) der Wanne (20) außen umgreifenden, vorzugsweise halbzylindrischen, verdrehbar um die Zylinderachse (24) angeordneten Schwenkdeckel (26) versehen ist, der in der Verschlußlage die Eingabeöffnung (36) bildende, nach oben gerichtete Öffnung der Wanne (20) überdeckt, wobei der von der Übergabevorrichtung (8) der Wägevorrichtung (6) abgegebene Abfall der Preßvorrichtung (3) und von dieser verdichtet dem Speicherbehälter (4) des Preß- und Speichercontainers (1) zugeführt wird.

2. Abfallsammeleinrichtung nach Anspruch 1, **dadurch gekennzeichnet, daß** an dem Wägebehälter (7) oder auf einem Wägegerüst (12) der Wägevorrichtung (6) zumindest ein Endschalter (10,10') für das Schließen der Eingabetüre (9) während des Wägevorganges und nach Beendigung des Abgabevorganges und insbesonders ein Verriegelungsteil (11) für das Versperren der Eingabetüre (9) in der Verschlußlage, an der Wägevorrichtung (6) angebracht ist.

3. Abfallsammeleinrichtung nach Anspruch 1, **dadurch gekennzeichnet, daß** der Schwenkdeckel (26) die Eingabetüre (9) des Eingabeschachtes (5) bildet.

4. Abfallsammeleinrichtung nach einem der Ansprüche 1 bis 3, **dadurch gekennzeichnet, daß** der Wägebehälter (7) in einem Waagegerüst (12), insbesonders in seiner Schwerpunktsebene (13) gelagert und das Waagegerüst (12) der Wägevorrichtung (6) an einem Tragrahmen (32) des Rahmens (14) der Abfallsammeleinrichtung beiderseits des Wägebehälters (7) mit wenigstens zwei und vorzugsweise vier Lagerungsstellen (15) an Lenkern (16) oder Federplatten oder dergleichen höhenbewegbar, vorzugsweise von einem Anschlagstück (23), zwischen einem oberen Anschlag (22) und einem unteren Anschlag (22') gehalten, gelagert ist.

5. Abfallsammeleinrichtung nach einem der vorhergehenden Ansprüche, **dadurch gekennzeichnet, daß** die Wanne (20) des Wägebehälters (7) mit Lagerzapfen (27) beiderseits in einem Waagegerüst (12) gelagert ist, wobei die Lagerzapfen (27) vorzugsweise in den beiden teilzylindrischen Böden (34) der Wanne (20) eingeschweißt sind und wobei an einem der Lagerzapfen ein am Waagegerüst (12) gelagerter Stellmotor (28), die Wanne (20) verdrehbar antreibend angreift.

6. Abfallsammeleinrichtung nach einem der vorhergehenden Ansprüche, **dadurch gekennzeichnet, daß** der Schwenkdeckel (26) der Wanne (20) mit beiderseitigen, teilzylindrischen Böden (35) an den Lagerzapfen (27) der Wanne (20) gelagert ist.

7. Abfallsammeleinrichtung nach einem der vorhergehenden Ansprüche, **dadurch gekennzeichnet, daß** der Schwenkdeckel (26) mit einem Endschalterteil (10') eines an dem Waagegerüst (12) angebrachten Endschalters (10) drehfest verbunden ist, wobei ein Verriegelungsteil (11) zur Verriegelung des Schwenkdeckels (26) vorzugsweise mit dem Endschalter (10, 10') zusammengebaut ist.

8. Abfallsammeleinrichtung nach einem der vorhergehenden Ansprüche, **dadurch gekennzeichnet, daß** das Waagegerüst (12) der Wägevorrichtung (6) den Wägebehälter (7) beiderseits überspannend, insbesonders als Rahmen ausgebildet ist und an zwei, insbesonders beiderseits des Wägebehälters (7) angeordneten oder vorzugsweise drei oder vier, Lagerungsstellen (15,15') mit Lenkern (16) oder Federplatten oder dergleichen mit dem Tragrahmen (32) höhenbewegbar verbunden ist.

9. Abfallsammeleinrichtung nach dem vorhergehenden Anspruch, **dadurch gekennzeichnet, daß** das Waagegerüst (12) mit einem Anschlagstück (23) versehen ist mit dem es zwischen einem oberen Anschlag (22) und einem unteren Anschlag (22') an dem Tragrahmen (32) höhenbewegbar ist.

10. Abfallsammeleinrichtung nach einem der vorhergehenden Ansprüche, **dadurch gekennzeichnet, daß** das Waagegerüst (12) mit mindestens einer und vorzugsweise zwei oder mehreren oberen Konsolen (17) und der Tragrahmen (32) mit mindestens einer und vorzugsweise zwei oder mehreren unteren Konsolen (18), insbesonders in der Schwerpunktsebene (13) des Wägebehälters (7) angeordnet, jeweils einen Druckgeber (19) als Wägesensor einspannen.

11. Abfallsammeleinrichtung nach einem der vorhergehenden Ansprüche, **dadurch gekennzeichnet, daß** die Wanne (20) des Wägebehälters (7), gleichzeitig die Übergabevorrichtung (8) zu der Preßvorrichtung (3) bildend, in eine mit der Öffnung nach unten verdrehbare Übergabelage bewegbar ist.

12. Abfallsammeleinrichtung nach einem der vorhergehenden Ansprüche, **dadurch gekennzeichnet, daß** die Wanne (20) des Wägebehälters (7) unmittelbar oberhalb des Preßkolbens (21) der Preßvorrichtung (3) angeordnet ist, die als Schwingkolbenpresse ausgebildet ist, wobei deren Preßkolben (21) um eine waagrechte, parallel zur Zylinderachse (24) der Wanne (20) angeordneten, Achse (37) bewegbar ist.

13. Abfallsammeleinrichtung nach einem der vorhergehenden Ansprüche, **dadurch gekennzeichnet, daß** in der teilzylindrischen Wanne (20) des Wägebehälters (7) ein Abstreifer, an der Innenwand des Zylindermantels (25) der Wanne (20) entlangstreichend, insbesonders ortsfest, angeordnet ist und von einer Halterung getragen wird, die durch einen hohl ausgebildeten Achszapfen (27) hindurchgeführt und an dem Waagegerüst (12) außerhalb der Wanne (20 befestigt ist, wobei der Abstreifer in der Übergabelage der Wanne (20), vorzugsweise an der zur Eingabeseite der Abfallsammeleinrichtung hin gerichteten Wannenkante liegend, angeordnet ist.

14. Abfallsammeleinrichtung nach einem der vorhergehenden Ansprüche, **dadurch gekennzeichnet, daß** der Eingabeteil (2) der Abfallsammeleinrichtung mit einer Kennungseinrichtung für die Zugangsberechtigung zu der Eingabetüre (9) des Preß- und Speichercontainers (1) versehen ist, die mit einer Steuerungsvorrichtung die Eingabetüre (9) nach der Kennung entriegelt und nach der Eingabe des Abfalls und Verschließen und Verriegeln der Eingabetüre (9) die Wägevorrichtung (6) betätigt und anschließend die Übergabevorrichtung (8) der Wägevorrichtung (6) zur Entleerung des Wägebehälters (7) in den Pressenraum (31) der Preßvorrichtung ((3) freigibt.

15. Abfallsammeleinrichtung nach einem der vorhergehenden Ansprüche, **dadurch gekennzeichnet, daß** mit dem Wägebehälter (7) oder dem Waagegerüst (12) ein Bewegungsschalter verbunden ist, der bei Bewegung des Wägebehälters (7) nach Verriegelung der Eingabetüre (9) den Steuerungsablauf unterbricht und die Steuerung wieder auf den Start zurücksetzt.

## Claims

1. A refuse-collecting facility for receiving, storing and compacting refuse, provided with a pressing and storage container (4) having an inlet chute (5), with an inlet opening (36) closable by an inlet door (9), lockable and unlockable by means of a control device and associated with a weighing device (6) substantially comprising a weighing container (7) and a transfer device (8) coupled or connected thereto and feeding the specified quantity of refuse to a storage container (4) associated with a pressing device (3), **characterised in that** the inlet chute (5) is substantially formed by the weighing device (6) arranged immediately upstream of the pressing device (3) of the pressing and storage container (1), and the inlet opening (36) of the inlet chute (5) with the inlet door (9) is provided in the weighing device (6), and the weighing container (7), together with the inlet door (9) and the transfer device (8), forms a weighing sluice, and the weighing container (7) comprises a trough (20) substantially forming a horizontal partial cylinder upwardly open in the filling position and downwardly open in the emptying position and, forming the transfer device (8), being rotatable about the cylinder axis (24) and being provided with a preferably semi-cylindrical swivelling lid (26) rotatable about the cylinder axis (24) and engaging over the outside of the cylinder casing (25) of the trough (20), the swivelling lid (26) covering the upward facing opening of the trough (20), forming the inlet opening (36), in the closed position, the refuse conveyed by the transfer device (8) of the weighing device (6) being fed to the pressing device (3) and, compacted by the latter, being fed to the storage container (4) of the pressing and storage container (1).

2. A refuse-collecting facility according to claim 1, **characterised in that** at least one limit switch (10, 10') for closing the inlet door (9) during the weighing process and after completion of the conveying process is mounted on the weighing container (7) or on a weighing structure (12) of the weighing device (6), and in particular a locking part (11) for locking the inlet door (9) in the closed position is mounted on the weighing device (6).

3. A refuse-collecting facility according to claim 1, **characterised in that** the swivelling lid (26) forms the inlet door (9) of the inlet chute (5).

4. A refuse-collecting facility according to any one of claims 1 to 3, **characterised in that** the weighing container (7) is mounted in a weighing structure (12), in particular in its centroidal plane (13), and the weighing structure (12) of the weighing device (6) is mounted on a supporting frame (32) of the framework (14) of the refuse-collecting facility by connecting rods (16) or spring plates or the like on both sides of the weighing container (7) at at least two, preferably four mounting points (15) so as to be vertically adjustable, preferably by means of a stop member (23) held between an upper stop (22) and a lower stop (22').

5. A refuse-collecting facility according to any one of the preceding claims, **characterised in that** the trough (20) of the weighing container (7) is mounted on either side of a weighing structure (12) by bearing journals (27) preferably welded into the two part-cylindrical bases (34) of the trough (20), and a servomotor (28), mounted on the weighing structure (12), engages one of the bearing journals and rotatably drives the trough (20).

6. A refuse-collecting facility according to any one of the preceding claims, **characterised in that** the two part-cylindrical bases (35) of the swivelling lid (26) of the trough (20) are mounted on the bearing journals (27) of the trough (20).

7. A refuse-collecting facility according to any one of the preceding claims, **characterised in that** the swivelling lid (26) is connected in a rotationally fixed manner to a limit-switch part (10') of a limit switch (10) mounted on the weighing structure (12), a locking part (11) preferably being mounted together with the limit switch (10, 10') for locking the swivelling lid (26).

8. A refuse-collecting facility according to any one of the preceding claims, **characterised in that** the weighing structure (12) of the weighing device (6), bridging both sides of the weighing container (7), is formed in particular as a framework and is vertically adjustably connected to the supporting frame (32) by connecting rods (16) or spring plates or the like at two bearing points (15, 15'), in particular arranged on either side of the weighing container (7), or preferably three or four bearing points (15, 15').

9. A refuse-collecting facility according to the preceding claim, **characterised in that** the weighing structure (12) is provided with a stop member (23), by means of which it is vertically adjustable on the supporting frame (32) between an upper stop (22) and a lower stop (22').

10. A refuse-collecting facility according to any one of the preceding claims, **characterised in that** the weighing structure (12) with at least one, preferably two or more upper brackets (17), and the supporting frame (32) with at least one, preferably two or more lower brackets (18), in particular arranged in the centroidal plane (13) of the weighing container (7), each load a pressure sensor (19) acting as a weighing sensor.

11. A refuse-collecting facility according to any one of the preceding claims, **characterised in that** the trough (20) of the weighing container (7), simultaneously forming the transfer device (8) for transfer to the pressing device (3), is rotatable into a downwardly open transfer position.

12. A refuse-collecting facility according to any one of the preceding claims, **characterised in that** the trough (20) of the weighing container (7) is arranged directly above the plunger (21) of the pressing device (3) formed as an oscillating plunger press, the plunger (21) of which is movable about a horizontal axis (37) arranged parallel to the cylinder axis (24) of the trough (20).

13. A refuse-collecting facility according to any one of the preceding claims, **characterised in that** a scraper, passing along the inner wall of the cylinder casing (25) of the trough (20), is arranged, in particular fixedly, in the part-cylindrical trough (20) of the weighing container (7) and is carried by a mounting guided through a hollow axle journal (27) and fixed to the weighing structure (12) outside the trough (20), the scraper preferably lying on the trough edge facing the inlet side of the refuse-collecting facility when the trough (20) is in the transfer position.

14. A refuse-collecting facility according to any one of the preceding claims, **characterised in that** the inlet part (2) of the refuse-collecting facility is provided with an identification device for authorising access to the inlet door (9) of the pressing and storage container (1), the identification device unlocking the inlet door (9) after identification by means of a control device, operating the weighing device (6) after the refuse has been fed in and the inlet door (9) has been closed and locked, and then releasing the transfer device (8) of the weighing device (6) for emptying the weighing container (7) into the pressing chamber (31) of the pressing device (3).

15. A refuse-collecting facility according to any one of the preceding claims, **characterised in that** a motion switch is connected to the weighing container (7) or the weighing structure (12) and interrupts the control sequence in the event of movement of the weighing container (7) after the inlet door (9) has been locked and resets the control device to start.

## Revendications

1. Dispositif de collecte de déchets pour recueillir, stocker et compacter des déchets, équipé d'un conteneur (1) de compression et de stockage présentant un puits de déversement (5), avec un orifice de déversement (36) qui peut être obturé par une porte d'introduction (9), peut être déverrouillé et verrouillé à l'aide d'une commande, et auquel est affecté un dispositif de pesage (6) comprenant, pour l'essentiel, un récipient de pesage (7) et un dispositif de transfert (8) couplé ou relié audit récipient et délivrant les déchets, en une quantité déterminée, à un réceptacle de stockage (4) auquel est affecté un dispositif de compression (3), **caractérisé par le fait que** le puits de déversement (5) est formé, pour l'essentiel, par le dispositif de pesage (6) implanté directement en amont du dispositif de compression (3) du conteneur (1) de compression et de stockage ; l'orifice de déversement (36) du puits de déversement (5), muni de la porte d'introduction (9), est ménagé sur le dispositif de pesage (6) ; le récipient de pesage (7) forme un sas de pesage en association avec la porte d'introduction (9) et le dispositif de transfert (8) ; et le récipient de pesage (7) est constitué d'une auge (20) qui matérialise, pour l'essentiel, un cylindre partiel couché ouvert vers le haut en position de remplissage, et vers le bas en position de vidage, et qui, en formant le dispositif de transfert (8), est agencée à rotation autour de l'axe (24) du cylindre et comporte un couvercle pivotant (26) préférentiellement semi-cylindrique, pouvant tourner autour de l'axe (24) du cylindre, ceinturant extérieurement l'enveloppe cylindrique (25) de l'auge (20) et recouvrant, dans la position d'obturation, l'orifice de l'auge (20) qui est dirigé vers le haut et forme l'orifice de déversement (36), sachant que les déchets, délivrés au dispositif de pesage (6) par le dispositif de transfert (8), sont acheminés vers le dispositif de compression (3) et, une fois compactés par ce dernier, vers le réceptacle de stockage (4) du conteneur (1) de compression et de stockage.

2. Dispositif de collecte de déchets, selon la revendication 1, **caractérisé par le fait qu'**au moins un interrupteur (10, 10') de fin de course est installé sur le récipient de pesage (7) ou sur un bâti de pesage (12) du dispositif de pesage (6), en vue de la fermeture de la porte d'introduction (9) au cours du processus de pesage et à l'achèvement du processus de délivrance ; et une pièce de verrouillage (11) est notamment installée sur le dispositif de pesage (6), en vue du blocage de la porte d'introduction (9) dans la position d'obturation.

3. Dispositif de collecte de déchets, selon la revendication 1, **caractérisé par le fait que** le couvercle pivotant (26) forme la porte d'introduction (9) du puits de déversement (5).

4. Dispositif de collecte de déchets, selon l'une des revendications 1 à 3, **caractérisé par le fait que** le récipient de pesage (7) est monté dans un bâti de pesage (12), en particulier dans le plan (13) de son centre de gravité ; et le bâti de pesage (12) du dispositif de pesage (6) est monté sur un encadrement de support (32) du cadre (14) du dispositif collecteur de déchets, de part et d'autre du récipient de pesage (7), avec mobilité en hauteur à l'aide d'au moins deux et préférentiellement quatre zones de portée (15), sur des biellettes (16), des plaques élastiques ou pièces similaires, en étant de préférence retenu, par une pièce d'arrêt (23), entre une butée supérieure (22) et une butée inférieure (22').

5. Dispositif de collecte de déchets, selon l'une des revendications précédentes, **caractérisé par le fait que** l'auge (20) du récipient de pesage (7) est montée de part et d'autre dans un bâti de pesage (12), par des tourillons (27), lesdits tourillons (27) étant préférentiellement intégrés par soudage dans les deux fonds (34) partiellement cylindriques de l'auge (20) ; et un servomoteur (28), entraînant l'auge (20) avec faculté de rotation et monté sur le bâti de pesage (12), venant en prise avec l'un desdits tourillons.

6. Dispositif de collecte de déchets, selon l'une des revendications précédentes, **caractérisé par le fait que** le couvercle pivotant (26) de l'auge (20) est monté sur les tourillons (27) de ladite auge (20), par des fonds (35) partiellement cylindriques situés de part et d'autre.

7. Dispositif de collecte de déchets, selon l'une des revendications précédentes, **caractérisé par le fait que** le couvercle pivotant (26) est relié, avec verrouillage rotatif, à une partie (10') d'un interrupteur (10) de fin de course installé sur le bâti de pesage (12), une pièce de verrouillage (11), conçue pour verrouiller ledit couvercle pivotant (26), étant de préférence structurellement regroupée avec ledit interrupteur (10, 10') de fin de course.

8. Dispositif de collecte de déchets, selon l'une des revendications précédentes, **caractérisé par le fait que** le bâti de pesage (12) du dispositif de pesage (6) est notamment réalisé sous la forme d'un cadre, en coiffant de part et d'autre le récipient de pesage (7) ; et est relié à l'encadrement de support (32) avec mobilité en hauteur, par des biellettes (16), des plaques élastiques ou pièces similaires, dans deux zones de portée (15, 15') notamment disposées de part et d'autre du récipient de pesage (7), ou préférentiellement dans trois ou quatre zones.

9. Dispositif de collecte de déchets, selon la revendication précédente, **caractérisé par le fait que** le bâti de pesage (12) est muni d'une pièce d'arrêt (23) par laquelle il est mobile en hauteur, sur l'encadrement de support (32), entre une butée supérieure (22) et une butée inférieure (22').

10. Dispositif de collecte de déchets, selon l'une des revendications précédentes, **caractérisé par le fait qu'**un indicateur de pression (19), agissant comme une sonde de pesée, est respectivement emprisonné par le bâti de pesage (12) à l'aide d'au moins une et, préférentiellement, de deux ou plusieurs consoles supérieures (17) ; et par l'encadrement de support (32) à l'aide d'au moins une et, préférentiellement, de deux ou plusieurs consoles inférieures (18) notamment situées dans le plan (13) du centre de gravité du récipient de pesage (7).

11. Dispositif de collecte de déchets, selon l'une des revendications précédentes, **caractérisé par le fait que** l'auge (20) du récipient de pesage (7), formant simultanément le dispositif de transfert (8) affecté au dispositif de compression (3), est mobile vers une position de transfert dans laquelle l'orifice peut tourner vers le bas.

12. Dispositif de collecte de déchets, selon l'une des revendications précédentes, **caractérisé par le fait que** l'auge (20) du récipient de pesage (7) est placée directement au-dessus du piston de compression (21) du dispositif de compression (3) réalisé sous la forme d'une presse à piston oscillant, dont le piston de compression (21) est mobile autour d'un axe horizontal (37) agencé parallèlement à l'axe (24) du cylindre de l'auge (20).

13. Dispositif de collecte de déchets, selon l'une des revendications précédentes, **caractérisé par le fait qu'**un racleur est logé dans l'auge (20) partiellement cylindrique du récipient de pesage (7), sur la paroi intérieure de l'enveloppe cylindrique (25) de ladite auge (20), notamment de manière fixe et avec effet de raclement par balayage, et est porté par un élément de retenue traversant un tourillon (27) de réalisation creuse, et fixé au bâti de pesage (12) en dehors de l'auge (20), sachant que, dans la position de transfert de l'auge (20), le racleur est de préférence disposé horizontalement, sur le bord de l'auge qui est tourné vers le côté déversement du dispositif collecteur de déchets.

14. Dispositif de collecte de déchets, selon l'une des revendications précédentes, **caractérisé par le fait que** la partie de déversement (2) dudit dispositif collecteur de déchets est munie d'un système d'identification pour autoriser l'accès à la porte d'introduction (9) du conteneur (1) de compression et de stockage, qui, à l'aide d'un dispositif de commande, déverrouille la porte d'introduction (9) après l'identification ; actionne le dispositif de pesage (6) après le déversement des déchets, et l'obturation et le verrouillage de la porte d'introduction (9) ; et libère, dans l'enchaînement, le dispositif de transfert (8) du dispositif de pesage (6), en vue du vidage du récipient de pesage (7) dans la chambre de compression (31) du dispositif de compression (3).

15. Dispositif de collecte de déchets, selon l'une des revendications précédentes, **caractérisé par le fait qu'**un commutateur réagissant aux mouvements est relié au récipient de pesage (7) ou au bâti de pesage (12), lequel commutateur interrompt le déroulement de la commande et ramène ladite commande au début, lors d'un mouvement du récipient de pesage (7), après verrouillage de la porte d'introduction (9).
